Europäisches Patentamt

European Patent Office

Office européen des brevets

(19)

(11) Numéro de publication: **0 176 405 B1**

(12) **FASCICULE DE BREVET EUROPEEN**

(45) Date de publication du fascicule du brevet:
**07.12.88**

(51) Int. Cl.⁴: **G 01 P 13/02,** G 01 P 5/165

(21) Numéro de dépôt: **85401709.2**

(22) Date de dépôt: **03.09.85**

(54) **Sonde de pression multifonction pour aéronef.**

(30) Priorité: **03.09.84 FR 8413631**

(43) Date de publication de la demande:
**02.04.86 Bulletin 86/14**

(45) Mention de la délivrance du brevet:
**07.12.88 Bulletin 88/49**

(84) Etats contractants désignés:
**BE CH DE GB IT LI NL SE**

(56) Documents cités:
**WO-A-82/02944**
**FR-A- 2 399 027**
**GB-A- 1 308 080**
**GB-A- 1 484 352**
**US-A- 3 329 016**
**US-A- 3 343 412**

(73) Titulaire: **BADIN CROUZET, Aéroport de Toussus-le-Noble Boîte Postale No. 13, F-78117 Chateaufort (Yvelines) (FR)**

(72) Inventeur: **Leblond, Henri, 1, résidence la Roseraie, F-78000 Versailles (Yvelines) (FR)**
Inventeur: **Cabot, Louis, 11, rue du Mont Charles Richet, F-75013 Paris (FR)**

(74) Mandataire: **Bloch, Robert et al, 6, rue du Faubourg Saint-Honoré, F-75008 Paris (FR)**

# Description

Dispositif permettant de mesurer les paramètres aérodynamiques d'un écoulement au moyen d'un corps fuselé s'orientant librement par rotation autour d'un axe dans ledit écoulement et porteur de prises de pressions totale et statique.

Dans les dispositifs connus de ce genre, tels que décrits dans les brevets français 2 113 746 et 2 399 027, il est prévu de monter la sonde de prise de pression sur une girouette montée à la cardan de manière à ce que, la sonde restant orientée dans l'écoulement, les influences perturbatrices dues aux variations de l'angle d'incidence soient théoriquement éliminées. En pratique, l'inertie de la girouette, les couples résistants dus aux articulations font que l'orientation de la sonde est toujours plus ou moins décalée par rapport au sens de l'écoulement. Il en résulte que la mesure de l'angle d'incidence local α, et par déduction celle de l'aéronef porteur de la sonde, qui est obtenue par une mesure mécanique n'est pas assez précise vis-à-vis des caractéristiques des avions modernes.

Le document GB-A-1 484 352 décrit un dispositif permettant de mesurer, par des moyens mécaniques, l'orientation aérodynamique d'un corps fuselé par rapport à son support.

Le document WO 82/02 944 divulgue un dispositif permettant de mesurer, par des moyens pneumatiques, l'angle d'incidence aérodynamique d'un corps fuselé dans un écoulement.

Le dispositif selon l'invention tel que défini dans la revendication 1 a pour but de s'affranchir des erreurs de la mesure mécanique de l'angle d'incidence α. Pour ce faire cette mesure est corrigée par une mesure de l'angle d'incidence pneumatique. La mesure de l'angle d'incidence α ainsi obtenue est plus précise et plus faible que celle de tous les autres dispositifs connus de ce genre, et ce aussi bien dans le domaine subsonique que supersonique.

Ainsi, la valeur α de l'angle d'incidence est obtenue à partir de deux mesures distinctes:

— une mesure, par des moyens mécaniques, de l'orientation αm du corps fuselé par rapport à son support,

— une mesure, par des moyens pneumatiques, de l'angle d'incidence aérodynamique αa du corps fuselé dans l'écoulement, l'angle d'incidence vrai étant défini par la relation $\alpha = \alpha m + \alpha a$.

Le corps fuselé consiste en un volet, mobile autour d'un axe perpendiculaire à la surface du porteur, c'est-à-dire au fuselage de l'aéronef par exemple.

Son degré de liberté est de l'ordre de ± 80° et les moyens mécaniques donnant la position angulaire αm du volet consistent en un capteur de position angulaire, fixé directement sur l'axe du volet pour éviter des erreurs dues à l'usure mécanique.

Les moyens pneumatiques permettant d'obtenir l'angle d'incidence aérodynamique αa consistent en deux prises de pression disposées symétriquement de part et d'autre du bord d'attaque du volet mobile. La mesure de l'angle d'incidence aérodynamique est obtenue par une mesure de la pression différentielle existant entre ces deux prises de pression.

Le dessin annexé illustre, à titre d'exemple, un mode de réalisation du dispositif conforme à la présente invention.

La figure 1 est une vue d'ensemble du dispositif.

La figure 2 est un schéma synoptique montrant comment sont traitées les informations αa et αm émanant respectivement des moyens pneumatiques et des moyens mécaniques mesurant l'angle d'incidence.

Tel que représenté, le dispositif consiste en un volet 1 ayant la forme d'une demi-aile delta qui peut être réchauffé électriquement pour éviter les problèmes du givrage. L'axe de rotation 8 du volet pénètre directement dans un boîtier 3 dans lequel il actionne un codeur optique absolu (Code Gray) associé à un codeur relatif incrémental. La résolution de la mesure angulaire αm est ainsi de l'ordre de 0,03°.

L'angle d'incidence aérodynamique αa vu par le volet 1 est mesuré à l'aide de deux prises de pression 4 et 5 disposées symétriquement au bord d'attaque 11 du volet côté intrados et côté extrados.

Ces prises délivrent une pression différentielle Δp qui est proportionnelle à l'angle d'incidence aérodynamique αa du volet 1 dans l'écoulement F. Cette pression agit sur un capteur 12 dont la classe de précision se situe entre $10^{-2}$ et $10^{-3}$ et qui est capable de supporter les conditions sévères de l'environnement.

Ce capteur est logé dans l'axe 8 du volet. Les transmissions électriques avec l'électronique de mesure sont faites par trois fils plats, pouvant travailler en torsion afin d'éviter les contacts flottants, et reliés à une plaque à bornes 13.

Pour pouvoir utiliser le dispositif quelle que soit la vitesse de l'écoulement, il convient de connaître en outre la pression statique et la pression totale ou dynamique.

En effet, le coefficient de proportionnalité k, définissant la sensibilité de la mesure de l'angle d'incidence pneumatique αa, dépend de ces deux paramètres. On obtient ces deux informations à l'aide de deux capteurs de pression 72 et 63 reliés respectivement aux prises de pressions totale et statique de l'appareil.

La prise de pression totale 7 est du type tube de Pitot. Elle est fixée sur l'arrière du volet 1 sur sa partie haute. La prise de pression statique est réalisée par deux prises d'air 6 et 6' disposées de part et d'autre du bord d'attaque 11 du volet et de façon symétrique. Ces deux prises d'air 6 et 6' débouchent dans un conduit commun 60.

Avantageusement les prises de pression statique 6 et 6' sont agencées pour compenser les perturbations de la pression statique locale de l'avion, dues à l'angle d'incidence et à la vitesse. Ceci est obtenu de façon connue par le choix des formes de manière à ce que la pression statique, induite par la circulation du fluide autour de la sonde, compense la perturbation de la pression statique due à l'avion et ce, quelles que soient la vitesse et l'angle d'incidence, aussi bien pour le domaine subsonique que pour le domaine supersonique.

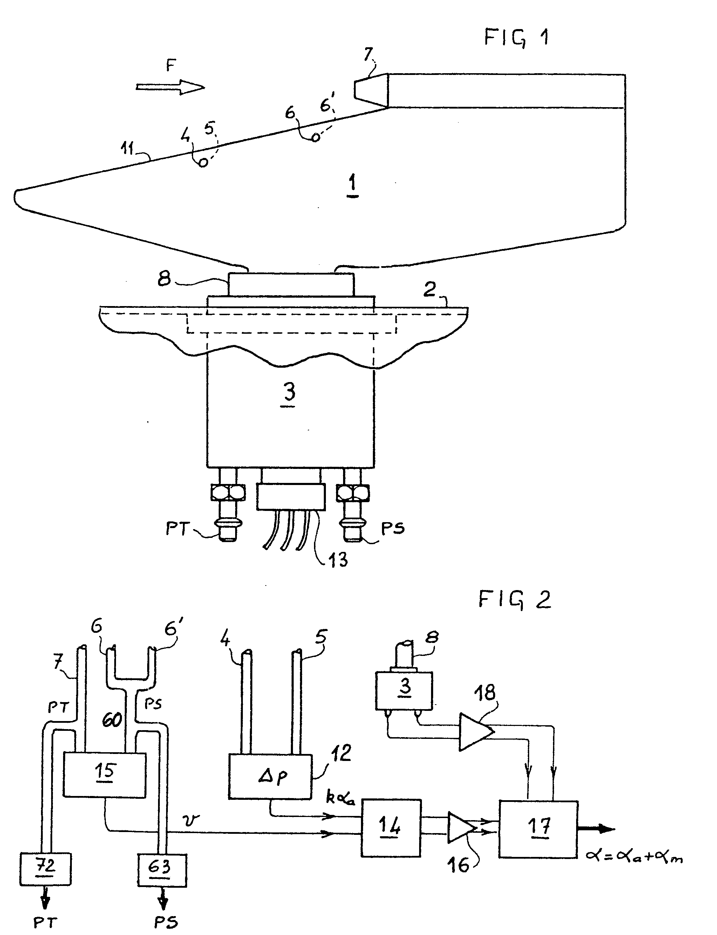

Les signaux de pression captés par la sonde objet de l'invention sont traités comme représenté sur le synoptique de la figure 2. La pression différentielle $\Delta p$ régnant entre les prises de pression 4 et 5, qui correspond à $\Delta p = k\alpha a$, est obtenue sous la forme d'un signal électrique au moyen d'un capteur de pression différentielle 12 qui délivre une tension proportionnelle à [k $\alpha a$].

Un autre capteur 15 de pression relative reçoit à la fois la pression totale $P_T$, issue de la prise 7, et la pression statique résultant des prises de pression 6 et 6' raccordées à un canal commun 60. Ce capteur délivre un signal électrique sous la forme d'une tension, proportionnelle à la vitesse aérodynamique v.

Un diviseur de tensions 14 normalise le signal [k $\alpha a$] selon la vitesse v, en fonction de laquelle varie le coefficient k et délivre un signal $\alpha a$ analogique, ou de préférence numérique par l'intermédiaire d'un convertisseur analogique digital 16. Ce signal $\alpha a$ est introduit dans un boîtier électronique sommateur 17 qui reçoit également le signal $\alpha m$, issu du codeur angulaire 3, après numérisation par un convertisseur analogique digital 18. Le signal sortant du sommateur 17 représente l'angle d'incidence recherché : $\alpha = \alpha a + \alpha m$.

Le dispositif selon l'invention permet de réaliser des sondes de pression multifonction, pour aéronefs, dont les mesures sont précises et non perturbées par les variations de vitesse et de l'angle d'incidence.

## Revendications

1. Dispositif permettant de mesurer les paramètres aérodynamiques d'un écoulement au moyen d'un corps fuselé (1) s'orientant librement par rotation autour d'un axe (8) dans ledit écoulement et porteur de prises de pressions totale (7) et statique (6, 6'), caractérisé en ce que la valeur de l'angle d'incidence $\alpha$ de l'aéronef porteur du dispositif, dans l'écoulement, est obtenue à partir de deux mesures distinctes:

   – une mesure, par des moyens mécaniques (3), de l'orientation $\alpha m$ du corps fuselé (1) par rapport à son support (2),

   – une mesure, par des moyens pneumatiques (4, 5), de l'angle d'incidence aérodynamique $\alpha a$ du corps fuselé (1) dans l'écoulement,

   l'angle d'incidence vrai étant défini par la relation $\alpha = \alpha m + \alpha a$.

2. Dispositif selon la revendication 1, caractérisé en ce que le corps fuselé (1) consiste en un volet mobile autour de l'axe (8) perpendiculaire à la surface du support (2) et lié à un capteur de position angulaire (3) qui délivre une mesure de $\alpha m$.

3. Dispositif selon la revendication 1, caractérisé en ce que la mesure de l'angle d'incidence aérodynamique $\alpha a$ est obtenue par une mesure de la pression différentielle $\Delta p$ régnant entre deux prises de pression (4) et (5) disposées symétriquement de part et d'autre du bord d'attaque (11) du corps fuselé (1).

4. Dispositif selon l'une des revendications 1 à 3, caractérisé en ce que les prises de pression statique (6,6') sont compensées des perturbations dues à la vitesse et à l'angle d'incidence, par un choix approprié de la forme du corps fuselé (1) et ce aussi bien pour le domaine subsonique que pour le domaine supersonique.

## Patentansprüche

1. Vorrichtung zum Messen der aerodynamischen Parameter einer Strömung mittels eines stromlinienförmigen Körpers (1), der sich durch Drehung um eine Achse (8) in der Strömung frei ausrichtet und Aufnehmer für den Gesamtdruck (7) und statischen Druck (6, 6') trägt, dadurch gekennzeichnet, dass der Wert des Anstellwinkels $\alpha$ des die Vorrichtung tragenden Luftfahrzeugs in der Strömung durch zwei verschiedene Messungen erhalten wird:

   – eine durch mechanische Mittel (3) durchgeführte Messung der Richtung $\alpha m$ des stromlinienförmigen Körpers (1) in bezug auf seinen Träger (2),

   – eine durch pneumatische Mittel (4, 5) durchgeführte Messung des aerodynamischen Anstellwinkels $\alpha a$ des stromlinienförmigen Körpers (1) in der Strömung, wobei der wahre Anstellwinkel durch die Beziehung $\alpha = \alpha m + \alpha a$ definiert wird.

2. Vorrichtung nach Anspruch 1, dadurch gekennzeichnet, dass der stromlinienförmige Körper (1) aus einer Klappe besteht, die um die zu der Oberfläche des Trägers (2) senkrechte Achse (8) beweglich und mit einem Winkelstellungsgeber (3), der eine Messung von $\alpha m$ liefert, verbunden ist.

3. Vorrichtung nach Anspruch 1, dadurch gekennzeichnet, dass die Messung des aerodynamischen Anstellwinkels $\alpha a$ durch eine Messung des Differenzdruckes $\Delta p$ erhalten wird, der zwischen zwei Druckaufnehmern (4) und (5) herrscht, die symmetrisch auf beiden Seiten der Vorderkante (11) des stromlinienförmigen Körpers (1) angeordnet sind.

4. Vorrichtung nach einem der Ansprüche 1 bis 3, dadurch gekennzeichnet, dass die Aufnehmer für den statischen Druck (6, 6') gegen Störungen durch die Geschwindigkeit und den Anstellwinkel durch eine geeignete Wahl der Form des stromlinienförmigen Körpers (1) und zwar für den Unterschallbereich ebenso wie für den Überschallbereich kompensiert sind.

## Claims

1. Device enabling to measure the aerodynamic parameters of a flow by means of a streamlined body (1) freely orienting itself by rotation about an axis (8) within said flow and mounting total (7) and static (6, 6') pressure pick-offs, characterized in that the value of the angle of incidence $\alpha$ of the aircraft mounting the device, within the flow, is obtained through two different measurements:

– a measurement, through mechanical means (3), of the orientation $\alpha m$ of the streamlined body (1) relative to its support (2),

– a measurement, through pneumatic means (4, 5), of the aerodynamic angle of incidence $\alpha a$ of the streamlined body (1) within the flow, the true angle of incidence being defined by the relation $\alpha = \alpha m + \alpha a$.

2. Device according to claim 1, characterized in that the streamined body (1) consists of a vane movable about the axis (8), perpendicular to the surface of the support (2) and connected to an angular position sensor (3) which delivers a measure of $\alpha m$.

3. Device according to claim 1, characterized in that the measurement of the aerodynamic angle of incidence $\alpha a$ is obtained through a measurement of the differential pressure $\Delta p$ prevailing between two pressure pick-offs (4) and (5) located symmetrically on both sides of the leading edge (11) of the streamlined body (1).

4. Device according to one of claims 1 to 3, characterized in that the static pressure pick-offs (6, 6') are compensated for perturbations due to speed and angle of incidence, by an appropriate choice of the shape of the streamlined body (1), and this for the subsonic range and for the supersonic range as well.

FIG 1

FIG 2